# EUROPEAN PATENT APPLICATION

(11) **EP 4 506 205 A1**
(43) Date of publication of application: **12.02.2025**
(21) Application number: 23191146.2
(22) Date of filing: 11.08.2023
(51) Int. Cl.: B60L 53/14, B60L 53/18, B60L 53/302, H01B 12/14, H01B 12/16

(54) **SUPERCONDUCTORS FOR EV CHARGERS**

(71) Applicant: ABB E-mobility B.V., 2629 JG Delft (NL)
(72) Inventor: BECH, Lars, 3119 JA Schiedam (NL)
(74) Representative: Maiwald GmbH

(57) **Abstract**

The invention relates to the field of electric connection arrangements, particularly for charging electric vehicles (400). The electric connection arrangement (100, 101) may connect a power converter (200) with a charging post (300) and/or the charging post (300) with an electric vehicle (400). The electric connection arrangement (100, 101) comprises a superconducting cable (110) for power transmission; a cooling layer (120), arranged around the superconducting cable (110); and an outer layer (130) configured for isolating the connection arrangement.

## Description

### Field of the Invention

The invention relates to the field of electric connection arrangements, particularly for charging electric vehicles. The invention further relates to a use, to a method, and to a non-transitory computer-readable storage medium.

### Background

At least some types of electric vehicles (EVs) are charged with high currents, i.e. currents of several hundreds of Amps. This may be caused, e.g., by a demand for fast charging the EV, and/or due to big batteries of the EV to be charged, for instance for batteries of a truck. These high currents usually produce a high power loss in the cables that are used for charging, resulting, e.g., in heat problems even for copper cables with low resistance. Therefore, it is desirable to provide means for reducing the power loss in these cables.

### Description

It is an objective of the invention to provide an electric connection arrangement, e.g. a kind of cable, with lower power loss. This objective is achieved by the subject-matter of the independent claims. Further embodiments are evident from the dependent claims and the following description.

One aspect relates to an electric connection arrangement for connecting a power converter with a charging post and/or for connecting the charging post with an electric vehicle. The electric connection arrangement comprises a superconducting cable for power transmission; a cooling layer, arranged around the superconducting cable; and an outer layer configured for isolating the connection arrangement.

The electric connection arrangement may be used in several regions of an EV charging system. Examples may comprise one or more sections, e.g. a connection between the power converter and the charging post, a connection between the charging post and an EV, and/or further sections. The connection(s) may comprise one line for each section, or may comprise several sub-sections. The current over the electric connection arrangements may be AC (alternating current) or DC (direct current). The power converter of the EV charging system may, e.g., be connected to a medium voltage (MV) line. The posts may be located on a different site than the power converter, e.g. more than, e.g., 5 metres, 10 metres, 20 metres, 50 metres, of even more than 100 metres away from the power converter. The line between the charging post and the EV may be significantly shorter, e.g. only a couple of metres.

The connection between the power converter and the charging post may be a connection that is not moved during its regular operation. In some embodiments, this connection may be arranged subterraneously. The connection between the charging post and the EV may be moved during - and/or right before or right after - its regular operation, e.g. when the electric connection arrangement is moved from a resting position of the cable to a charging position, e.g. into a plug of the EV, and/or when it is moved back. Hence, not-moveable sections of the electric connection arrangement may be designed and/or optimized differently than the moveable sections. As an example, the connection between the power converter and the charging post may be optimized for best conduction conditions, whereas the connection between the charging post and the electric vehicle may be a trade-off between best conduction conditions and a minimum of flexibility of the electric connection arrangement.

The superconducting cable may consist of a high-temperature superconductor. This may advantageously reduce the overall cooling effort. The superconducting cable may comprise one or more wires. The number of wires may influence the design of the cooling layer. Particularly for an electrically non-insulating cooling fluid, the one or more wires may be wrapped by an electrically insulating and thermally well-conducting material. This may be preferred for one-wire arrangements. Cooling fluids used for the cooling layer may comprise Liquid Helium, Liquid Nitrogen, Industrial refrigerants, R-410A, R-134A, R404A, oil, water-glycol, liquid CO₂, and others. The cooling fluids that are actually used may depend on the critical temperature of the superconductor. The cooling layer is configured for cooling the superconducting cable to a temperature low enough that the superconducting cable has a superconducting property, i.e. an electrical resistance of zero ohms. A reserve of a few centigrade may be foreseen, i.e. the cooling layer may be configured for providing a lower temperature than required for the superconducting cable. Lorenz forces under normal operation, and especially under short-circuit conditions, may cause forces that push the conductors apart. The magnetic fields are also detrimental to the superconductive properties of the conductor materials. To counteract this force, a certain distance between the conductors may be useful. However, this may will increase the inductance, which could be desirable to minimize. Hence, additionally or as an alternative, a strong sheath or straps may be favoured, compared to a "glue layer".

The outer layer, which is configured for thermally - and, optionally, electrically - isolating the connection arrangement, may further contribute to keep the temperature of the superconducting cable low enough for the cable's superconducting property. A highly thermally isolating outer layer may, additionally, contribute to keep the temperature low even in cases of temporarily reduced cooling power.

This electric connection arrangement advantageously provides a solution with zero power loss. This does not only reduce thermal problems caused by the high currents, but also leads to an increased efficiency of the EV charging system. Furthermore, the diameter of the cables can be reduced. Particularly the combination of these materials and/or features enables a new category of power transmission. Hence, the electric connection arrangement may not only be applied to EV charging systems, but also, for instance, to battery storage systems, solar power, power distribution, other applications that require high currents.

In various embodiments, the electric connection arrangement further comprises an outer mantle for protecting the connection arrangement. The outer mantle may protect particularly the outer layer - but also the cooling layer and/or the superconducting cable - from damaging, e.g. from mechanical damaging and/or from chemical, e.g. caused by dirt and water. The outer mantle may comprise materials like LDPE (Low-Density-Polyethylen), HDPE (High Density Polyethylen), steel armor, PVC (Polyvinyl Chloride), further materials, and/or composites.

In various embodiments, the cooling layer is configured for keeping a temperature of the superconducting cable at or below -15 °C, -25 °C, -50 °C, -60 °C, -70 °C, -140 °C, -190 °C. The temperature ranges to be achieved may depend on the critical temperature of the superconducting cable. The temperature ranges may further be kept above temperatures of 77 Kelvin, i.e. -196.2 °C or -321.1 °F.

In various embodiments, the cooling layer comprises materials like liquid helium, liquid nitrogen, industrial refrigerants, R-410A, R-134A, R404A, oil, water-glycol, liquid CO₂, and others. The selection of the fluids of the cooling layer may depend on criteria like heat capacity, boiling point, conductivity, polar/non-polar, storage requirements, corrosiveness, and/or further ones.

In various embodiments, the outer layer comprises aerogels and/or aerogel blankets. Aerogels are advantageously good thermal insulators, so that using the electric connection arrangement becomes feasible in normal ambient temperature ranges, without elaborate and effortful housings. Aerogels are advantageously also good electrical insulators, so that a high degree of safety can be provided, even for high charging voltages.

In various embodiments, the superconducting cable comprises at least one of MgB₂, copper-substituted lead apetite, Cuperates, YBCO, HgBa2Ca2Cu3O8+δ, Indium Tin oxide, higher titanium oxides, NbTi, Nb₃Sn, and/or further ones.

In various embodiments, the superconducting cable has a diameter of about 1 cm, about 5 cm, about 10 cm, about 20 cm, about 50 cm, and/or others. Additionally or as an alternative, the superconducting cable consists of a plurality of wires having a diameter in a range of about 0.1 cm to 1 cm.

In various embodiments, the electric connection arrangement is configured for currents between 100 A and 7000 A, for example between 300 A and 5000 A, for example between 500 A and 3000 A. The EV charging systems may be designed, for instance, for current ranges of several thousand Amps, voltages up to 1000 V, 1250 V, 1500 V, 1800 V, 3000 V and power ranges up to 30 MWatts.

The electric connection arrangement described above and/or below may be designed for passenger cars, for trucks, even for high-power trucks like mining trucks, for some types of ships and/or for electrically driven airplanes. Moreover, this electric connection arrangement may also be applied to light rail, heavy rail, aircraft like eVTOL (electric Vertical Take-Off and Landing aircraft), helicopters, tanks, ships, ferries, hovercraft, battery storage, mobile home, trailers, and/or further ones.

An aspect relates to a use of an electric connection arrangement as described above and/or below for an electric connection between a power converter and a charging post and/or for an electric connection between the charging post and an electric vehicle, and/or for an electric connection between the power converter and an electric grid, e.g. to a medium-voltage (MV) grid.

An aspect relates to a method for handling an electric connection arrangement between a charging post and an electric vehicle, the method comprising the steps of: determining a minimum bending radius of the electric connection arrangement; arranging at least one robot arm at a handle of the electric connection arrangement; defining a trajectory of the at least one robot arm between a first resting position to a second charging position, the trajectory being designed for moving the electric connection arrangement with a bending radius greater than the minimum bending radius of the electric connection arrangement; and
handling, by a control unit, the at least one robot arm based on the trajectory before and/or after charging the electric vehicle.

The robot arm may comprise one or more joints. The robot arm may be integrated in the electric connection arrangement, and/or may be designed as an exoskeleton. The minimum bending radius of the electric connection arrangement may be 10 cm. This method may contribute to make the use of the this electric connection arrangement feasible. Particularly, the robot-based plugging and unplugging of the connection arrangement may prevent the superconducting cable from breaking, even in cases when quite brittle superconducting cables are used. Hence, one of the main hurdles of using superconductors for moveable cables may, thus, be overcome. Using a plurality of thin wires may further contribute to a smaller minimum bending radius of the electric connection arrangement.

An aspect relates to a non-transitory computer-readable storage medium having a program stored therein, which, when executed on a control unit instructs at least one robot arm to handle said robot arm based on a defined trajectory.

For further clarification, the invention is described by means of embodiments shown in the figures. These embodiments are to be considered as examples only, but not as limiting.

### Brief Description of the Drawings

The drawings depict:
- **Fig. 1**: schematically a scenario of an EV system according to an embodiment;
- **Fig. 2a, 2b**: schematically an example of an electric connection arrangement according to an embodiment;
- **Fig. 3**: schematically an example of a robot arm according to an embodiment;
- **Fig. 4**: a flow diagram according to an embodiment.

### Detailed Description of Embodiments

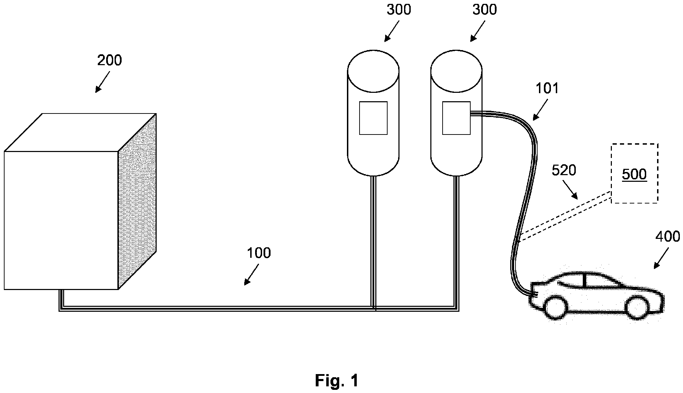

**Fig. 1** shows schematically a scenario of an EV system according to an embodiment. The EV system comprises a power converter 200, a plurality of posts 300 and an electric vehicle (EV) 400. The power converter 200 may be connected to a power source, e.g. to a medium voltage (MV) grid. An electric connection arrangement 100 is arranged between the power converter 200 and the charging post 300. An electric connection arrangement 101 is arranged between the charging post 300 and the EV 400. The connection(s) 100 and 101 may comprise one line for each section, or they may comprise several sub-sections. In various embodiments, the connection 100 may be longer than connection 101. In some embodiments, the connection 101 may be arranged subterraneously.

In some embodiments, the electric connection arrangements 100 and 101 may be designed identically. In other embodiments, the electric connection arrangement 100 may be designed differently than the arrangement 101. Particularly, the electric connection arrangement 101 may have a higher mechanical flexibility, so that the arrangement 101 may be moved between a resting position to a charging position, in which the EV's charging system is plugged to the electric connection arrangement 101, e.g. via a connector. The handling of the arrangement 101 may, optionally, be supported by a robot arm 520, which may be controlled by a control unit 500.

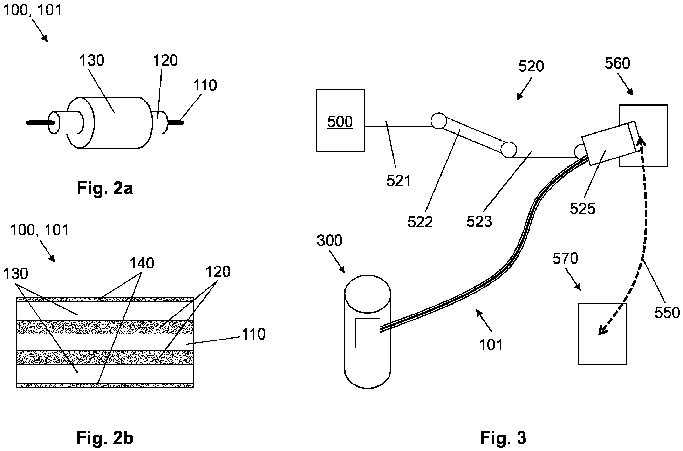

**Figs. 2a** and **2b** show schematically an example of an electric connection arrangement 100 and/or 101 according to an embodiment. **Figs. 2a** and **2b** show basically the same entity, **Fig. 2a** in a perspective view and **Fig. 2b** in a sectional view. The electric connection arrangement 100, 101 comprises a superconducting cable 110 for power transmission. The superconducting cable 110 may be of a material of high-temperature superconductors. A cooling layer 120 is arranged around the superconducting cable 110. In some embodiments, the superconducting cable 110 may comprise a plurality of wires, so that the fluid of the cooling layer 120 may flow between the plurality of wires. The electric connection arrangement 100, 101 further comprises an outer layer 130, which configured for isolating, particularly thermally isolating, the connection arrangement 100, 101.

In various embodiments, the electric connection arrangement may further comprise an outer mantle 140 for protecting the connection arrangement. The outer mantle may protect particularly the outer layer - but also the cooling layer and/or the superconducting cable - from damaging, e.g. from mechanical damaging and/or from chemical, e.g. caused by dirt and water.

**Fig. 3** shows schematically an example of a robot arm 520, for moving the electric connection arrangement 101 from a first resting position 560 to a second charging position 570 and/or back. The robot arm 520 may be one piece or comprise a plurality of segments 521, 522, 523. The robot arm 520 may hold a connector 525, which is configured plugging into a corresponding electric connection of an EV (not shown). The moving may be done along a trajectory 550 of the at least one robot arm 520. In cases where a plurality of (e.g. segmented) robot arms 520 are used to support the arrangement 101, a plurality of trajectories 550 may be followed. The trajectory (or trajectories) 550 may particularly take into consideration that the electric connection arrangement 101, particularly its superconducting cable 110, has a limited flexibility, because at least some superconducting cable materials may be brittle and should be protected from breaking. In other words: When moving the electric connection arrangement 101, the movement should in no section of the electric connection arrangement 101 fall below a minimum bending radius. Hence, the trajectory 550 is designed or defined for moving the electric connection arrangement 101 with a bending radius greater than the minimum bending radius of the electric connection arrangement 101. The movement may be performed fully automated or, in some cases, partly supported manually.

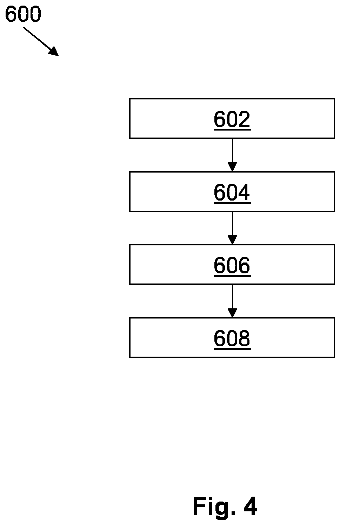

**Fig. 4** shows a flow diagram 600 according to an embodiment. The flow diagram 600 depicts a method for handling an electric connection arrangement 101 between a charging post 300 and an electric vehicle 400, as shown, e.g., in **Fig. 1****.** In a step 602, a minimum bending radius of the electric connection arrangement 101 is determined. In a step 604, at least one robot arm 520 is arranged at a handle 525 of the electric connection arrangement 101. In a step 606, a trajectory 550 of the at least one robot arm 520 is defined. The trajectory 550 stretches between a first resting position 560 and a second charging position 570 of the electric connection arrangement 101. The trajectory 550 is designed for moving the electric connection arrangement 101 with a bending radius greater than the minimum bending radius of the electric connection arrangement 101. Considering the minimum bending radius may prevent the electric connection arrangement 101 from breaking. In a step 608, the at least one robot arm 520 is handled based on the trajectory 550, particularly before and/or after charging the electric vehicle 400.

### List of Reference Symbols

- 100, 101: electric connection arrangement
- 110: superconducting cable
- 120: cooling layer
- 130: outer layer
- 140: outer mantle
- 200: power converter
- 300: charging post
- 400: electric vehicle (EV)
- 500: control unit
- 520: robot arm
- 521 - 523: segments
- 525: connector, handle of the electric connection arrangement
- 550: trajectory
- 560: resting position
- 570: charging position
- 600: flow diagram
- 602 - 608: steps

## Claims

1. An electric connection arrangement (100, 101) for connecting a power converter (200) with a charging post (300) and/or for connecting the charging post (300) with an electric vehicle (400), the electric connection arrangement (100, 101) comprising:
a superconducting cable (110) for power transmission;
a cooling layer (120), arranged around the superconducting cable (110); and
an outer layer (130) configured for isolating the connection arrangement.

2. The electric connection arrangement (100, 101) of claim 1,
further comprising an outer mantle (140) for protecting the connection arrangement.

3. The electric connection arrangement (100, 101) of claim 1 or 2,
wherein the cooling layer (120) is configured for keeping a temperature of the superconducting cable (110) at or below -15 °C, -25 °C, -50 °C, -60 °C, -70 °C, -140 °C, -190 °C.

4. The electric connection arrangement (100, 101) of any one of the preceding claims,
wherein the cooling layer (120) comprises liquid helium, liquid nitrogen, industrial refrigerants, R 410A, R-134A, R404A, oil, water-glycol, liquid CO₂, and others.

5. The electric connection arrangement (100, 101) of any one of the preceding claims,
wherein the outer layer (130) comprises aerogels and/or aerogel blankets.

6. The electric connection arrangement (100, 101) of any one of the preceding claims,
wherein the superconducting cable (110) comprises at least one of MgB₂, copper-substituted lead apetite, Cuperates, YBCO, HgBa2Ca2Cu3O8+δ, Indium Tin oxide, higher titanium oxides, NbTi, Nb₃Sn, and/or further ones.

7. The electric connection arrangement (100, 101) of any one of the preceding claims,
wherein the electric connection arrangement (100, 101) is configured for currents between 100 A and 5000 A, for example between 300 A and 4000 A, for example between 500 A and 3000 A.

8. The electric connection arrangement (100, 101) of any one of the preceding claims,
wherein the electric vehicle (400) is a passenger car, a truck, a ship and/or an aircraft.

9. Use of an electric connection arrangement (100, 101) of any one of the preceding claims for an electric connection between a power converter (200) and a charging post (300) and/or for an electric connection between the charging post (300) and an electric vehicle (400), and/or for an electric connection between the power converter (200) and an electric grid.

10. A method for handling an electric connection arrangement (101) between a charging post (300) and an electric vehicle (400), the method comprising the steps of:
determining a minimum bending radius of the electric connection arrangement (101);
arranging at least one robot arm (520) at a handle (525) of the electric connection arrangement (101);
defining a trajectory (550) of the at least one robot arm (520) between a first resting position (560) to a second charging position (570), the trajectory (550) being designed for moving the electric connection arrangement (101) with a bending radius greater than the minimum bending radius of the electric connection arrangement (101); and
handling, by a control unit (500), the at least one robot arm (520) based on the trajectory (550) before and/or after charging the electric vehicle (400).

11. A non-transitory computer-readable storage medium having a program stored therein, which, when executed on a control unit (500) instructs at least one robot arm (520) to handle said robot arm (520) based on a trajectory (550) defined according to claim 10.
